# EUROPEAN PATENT SPECIFICATION

(11) **EP 4 364 602 B1**
(45) Date of publication and mention of the grant of the patent: **17.12.2025**
(21) Application number: 24162975.7
(22) Date of filing: 14.10.2022
(51) Int. Cl.: A43B 21/26, A43B 23/04, A43B 23/08, A43B 11/02, A43B 3/24

(54) **FOOTWEAR COUNTER FOR EASIER ENTRY AND REMOVAL**
SCHUHVERSTÄRKUNG ZUM LEICHTEREN EIN- UND AUSSTIEG
CONTREFORT DE CHAUSSURES POUR UNE ENTRÉE ET UN RETRAIT PLUS FACILES

(30) Priority: 15.10.2021 US 202163256521 P
(43) Date of publication of application: 08.05.2024
(62) Divisional of application: 22881838.1
(73) Proprietor: Skechers U.S.A., Inc. II, Manhattan Beach, CA 90266 (US)
(72) Inventor: WEEKS, John Maxwell, Manhattan Beach, CA 90266 (US); KELLEY, Scott, Manhattan Beach, CA 90266 (US); XIE, Hui, Manhattan Beach, CA 90266 (US); STOCKBRIDGE, Kurt, Manhattan Beach, CA 90266 (US); CHUANG, Frank F., Manhattan Beach, CA 90266 (US); LIAO, Pei-Chun, Manhattan Beach, CA 90266 (US); TJA, Johnson, Manhattan Beach, CA 90266 (US)
(74) Representative: D Young & Co LLP

(56) References cited:
- CN-A- 109 393 642
- US-A1- 2010 319 218
- US-A1- 2020 253 333
- US-A1- 2020 345 098

## Description

### CROSS REFERENCE TO RELATED APPLICATIONS

The present disclosure claims the benefit of priority from U.S. Provisional Patent No. 63/256,521, which was filed on October 15, 2021.

### TECHNICAL FIELD

The present disclosure generally relates to a heel counter or a component of a heel counter of a shoe, and in particular a heel counter that is designed to allow for easier entry of the wearer's foot into the shoe.

### BACKGROUND

Conventionally, when donning footwear such as sports shoes, the user must often use one or both hands or operate a shoe horn separate from the shoe to properly insert the foot into the shoe and secure the quarter from collapsing under the heel.

Previously proposed arrangements are disclosed in US 2020/253333 A1, which describes an article of footwear including an upper defining a footreceiving cavity with a heel region, and a heel support device extending around the rear of a heel region from a lateral side to a medial side. The heel support device may include a plurality of slats and a base, the plurality of slats providing a progressive gradient of lengths and/or widths, and/or one or more pegs extending from the device for attachment to a footwear upper, and/or an elongated tip that may be disposed in a cavity of an extension of a heel collar of the upper. US 2020/253333 A1 does not disclose, at least, a shoe comprising a heel cup, wherein: in a vertical cross-section, a rearmost portion of the heel cup has a S wave shape; or wherein the heel cup is attached to an interior compressible layer, wherein the compressible layer extends into the shoe opening, wherein the compressible layer is configured to be compressed by a user's foot during insertion or removal of the user's foot, and configured to at least partially expand to hold an ankle of the user's foot once the foot is inserted.

### BRIEF SUMMARY OF DISCLOSURE

The invention relates to a shoe as defined in claim 1. Preferred embodiments are defined in the dependent claims.

Aspects of this invention relate to an article of footwear that has a structure capable of distortion to support easier foot insertion.

In one aspect of the invention, a heel cup may be uniformly molded with an upper portion, midportion, and lower portion, and the upper portion has a smaller mediolateral length than the midportion. The midportion and lower portion may form a concave structure configured to receive the heel. The upper portion of the heel cup has a first configuration in its native state and is capable of distorting into a second configuration under a load of a user's foot when the user is donning the footwear. In the second configuration, at least part of the upper portion is lowered relative to the first configuration and the upper portion is capable of returning to the first configuration after the load of the user's foot is removed. The midportion may include a peripheral portion having a first thickness and a central portion having a second thickness, and the second thickness is less than the first thickness.

In another aspect of the invention, the upper portion of a heel cup has a first configuration in its native state and is capable of distorting into a second configuration under a load of a user's foot when the user is donning the footwear and the heel cup is capable of returning to the first configuration after the load of the user's foot is removed. In the first configuration, the upper portion has a downward incline with a first angle relative to a vertical line that is normal to a horizontal surface of the floor, and the upper portion in the second configuration has an incline with a second angle greater than the first angle. Additionally, in the second configuration, a lower region of a central portion of the heel cup extends outward in a direction away from the shoe opening that causes the shoe opening to widen along the mediolateral direction.

In another aspect of the invention, an upper of an article of footwear includes a U-shaped foamed ankle collar that is substantially tubular in shape and forms the topmost region of the foot receiving shoe opening. The foamed ankle collar may extend at least partially around and over the foot receiving shoe opening and may be compressed by the user's heel during foot insertion. The ankle collar may exert pressure on the user's ankle once the foot is inserted into the footwear. The ankle collar may also have a flattened region along its length forming a downward angle from the topmost region toward the front of the article of footwear.

In another aspect of the invention, a heel counter support is located on the upper and above the sole structure. The heel counter support may have at least two hollow receptacles with backward angles. Additionally, each one of the two hollow receptacles receive one end of a compressible component. The compressible component has a first configuration in its native state, and the compressible component is capable of distorting into a second configuration under a load of a user's foot when the user is donning the footwear and is capable of automatically returning to the first configuration after the user's foot in fully inserted into the footwear.

### BRIEF DESCRIPTION OF THE DRAWINGS

By way of example only, selected embodiments and aspects of the present invention are described below. Each description refers to a figure ("FIG.") which shows the described matter. Some figures shown in drawings or photographs that accompany this specification may be for footwear that is for either the left or right foot. Each figure includes one or more identifiers for one or more part(s) or elements(s) of the invention.

Various embodiments are described with reference to the drawings, in which:
FIG. 1 is a front view of a compressible heel cup.
FIG. 2 is a perspective view of the compressible heel cup of FIG. 1.
FIG. 3 is a side view of the compressible heel cup of FIG. 1.
FIGS. 4A and 4B are a side-by-side front perspective view of the compressible heel cup of FIG. 1 in its compressed configuration (4A) and its uncompressed configuration (4B).
FIGS. 4C and 4D are a side-by-side top view of the compressible heel cup of Fig. 1 placed within a shoe in its compressed configuration (4C) and its uncompressed configuration (4D).
FIG. 5 is a front view of a heel cup configured to have a series of crisscross beams.
FIG. 6A is a schematic illustration of a cross-section of arc lengths of the rearmost portion of the heel cup of FIG. 1.
FIG. 6B is cross-sectional view of the heel cup of FIG. 1 taken at lines 6-6 in FIG. 1.
FIG. 7 is a side view of a heel counter with a heel cup located in the interior of the heel counter.
FIG. 8 is a top view of the heel counter of FIG. 7.
FIG. 9 is a perspective view of the heel counter of FIG. 7.
FIG. 10 is a cross-sectional view of the heel counter of FIG. 8 taken at lines 10-10 in FIG. 8.
FIG. 11 is a perspective view of a shoe with a heel counter incorporating a rigid heel cup.
FIG. 12 is a side view of the shoe of FIG. 11.
FIG. 13 is a rear view of the shoe of FIG. 11.
FIG. 14 is a bottom view of a tongue and an instep support.
FIG. 15 is a perspective view of a shoe with a cushioned lining.
FIG. 16 is a side view of the cushioned lining of FIG. 15.
FIG. 17 is a perspective view of the cushioned lining of FIG. 15.
FIG. 18 is a top view of the cushioned lining of FIG. 15.
FIG. 19 is a cross-sectional view of the cushioned lining of FIG. 18 taken at lines 19-19. in FIG. 18.
FIG. 20A is a lateral view of a shoe with a heel counter support.
FIG. 20B is a perspective view of a shoe with a heel counter support.
FIG. 20C is a rear view of the shoe of FIG. 20A.
FIG. 21 is a perspective view of the bottom of the upper of the shoe of FIG. 20.
FIG. 22 is a perspective view of the sole and heel counter support of the shoe of FIG. 23.

### DETAILED DESCRIPTION

A shoe may comprise a sole and an upper. The sole may comprise an outsole, a midsole, and/or an integrally formed outsole and midsole. The upper may comprise a toe box, a vamp, a tongue, a medial quarter, a lateral quarter, and a heel counter. The shoe has a forefoot portion, a rear portion, a medial side and a lateral side. The upper may comprise an exterior layer, interior layers or interior structure, and/or an inner lining. The upper may form a shoe opening that is capable of receiving a user's foot when the user is donning the shoe.

The heel counter or rear portion of the upper may comprise a structure(s) that enables easier insertion of the foot into the shoe opening. The structure(s) may also support easier removal of the foot. The heel counter or rear portion of the upper may further have a transient widening when the user is donning or removing the shoe. The widening of the shoe opening may be initiated by the user placing a load on the heel counter or rear portion of the upper that may be exerted by the user's foot with minimal to no assistance by the user's hands. In other embodiments of the invention, the heel counter may be compressible when placed under sufficient load and return to its uncompressed stated. The lowering of the heel counter may also allow easier insertion of the user's foot. Once a foot is inserted into the shoe, the heel counter may have a compressible layer, such as a foam component, that secures or enhances securement of the foot during user's normal wear of the shoe.

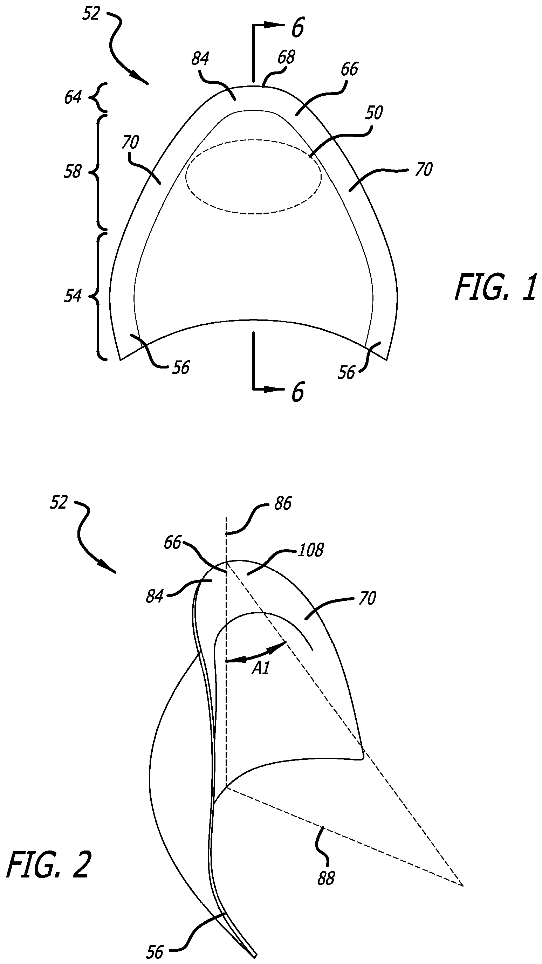

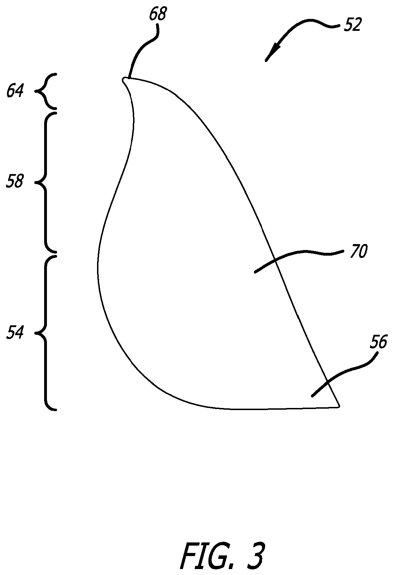

**Compressible Heel Cup.** Referring to the embodiments of FIGS. 1-10 a heel counter 32 may comprise a compressible heel cup 52 which may be an interior component of the upper 16, a portion of the inner lining 46 or an attachment adjacent to the inner lining 46 of the upper 16 such that the heel cup 52 makes contact with the foot, or a portion of the exterior layer 42 of the upper 16 or an attachment of an outer surface of the exterior layer 42 of the upper 16.

Referring to the exemplary embodiment of FIGS. 1-4, the heel cup 52 has a shape substantially corresponding to a heel covering and having a profile resembling a pear-like shape. The heel cup has a mediolateral width near the heel cup collar 84 that is less than the mediolateral width of the lower portion 54 as shown in FIGS. 1-2

As shown in FIG. 2, the inner wall 66 of the upper portion 64 of the heel cup at the rearmost portion of the heel cup may have a downward incline of between 0 to 90 degrees relative to a vertical line 86 that is normal to the horizontal surface 88 of the floor. In this exemplary embodiment, the upper portion 66 may have a downward incline of 30 degrees. The inner wall 66 of the upper portion 64 of the heel cup 52 may also have a convex curvature facing toward the shoe opening 48. The top portion of the convex curvature has the downward incline A1 of 30 degrees. The lower portion of the convex curvature extends just above the portion of the heel cup 52 that receives the heel. The lower portion of the convex curvature may have a downward incline less than the downward incline of A1 and gradually decreases as it approaches an incline equal to the vertical line 86. The heel cup 52 has a concave curvature that surrounds the rear portion of the heel. The medial and lateral sides of the heel cup 52 may also extend and form support of part of the quarter and even as far as the vamp.

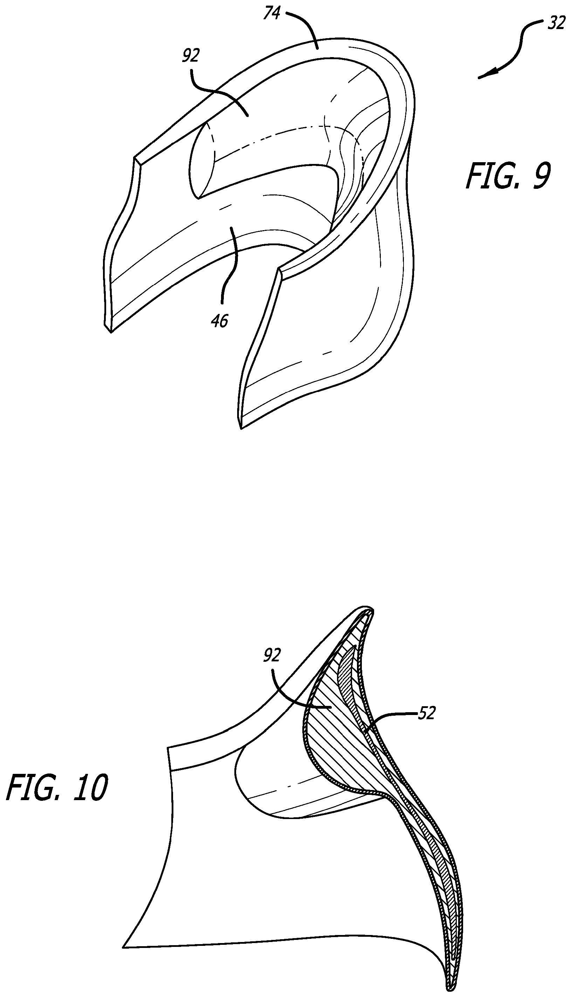

The thickness of the heel cup 52 may be reduced at various locations. The top edge line 88 may have a tapering of the inner surface of the heel cup 52 and outer surface of the heel cup 52. The heel cup 52 may have increased thickness T1 along the other perimeter edges, such as 2 to 3 mm. In another exemplary embodiment, the thickness T1 may be reduced in certain areas to provide greater flexibility to the heel cup 52 when donning or removing the shoe 12. In one embodiment, the thickness T1 of the heel cup 52 may decrease gradually from a peripheral portion 70 forming an area at the periphery of the heel cup 52 toward the central portion or region 50 of the mid-portion 58. The minimum thickness T1 in the central region 50 of the mid-portion 58 may be approximately, but not limited to 1/4 to 1/6 the thickness relative to the thickest portions at the periphery of heel cup 52, such as 0.5 to 1 mm. The thickest region of the top portion may be greater than the thickest region of the bottom portion. The reduced thickness T1 of the central region of the mid-portion 58 may allow for the heel cup 52 to compress under sufficient load. In an alternate embodiment, the thickness T1 may be reduced across the entire mediolateral portion or in multiple regions such as regions in the mid-portion 58 and/or regions of the upper portion 64. The thinner regions may provide increased flexibility and bending of the heel cup 52 which provides the necessary compressibility under the load of a user's foot such as during the donning of a shoe 12. Such compression may allow the upper portion 64 and/or the mid-portion 58 of the heel cup 52 to move rearward and widen the shoe opening 48 to allow easier entry of the foot. The heel cup 52 is capable of distortion from a first configuration in its native state, to a second configuration under a load of a user's foot when the user is donning the footwear. For example, the heel cup 52 may be partially compressed such that the upper portion 64 and/or mid-portion 58 of the heel cup 52 is lowered sufficiently to allow the insertion of the user's foot. See for example FIG. 9. Once the user's foot is inserted into the shoe 12, the heel cup 52 may return to its uncompressed configuration.

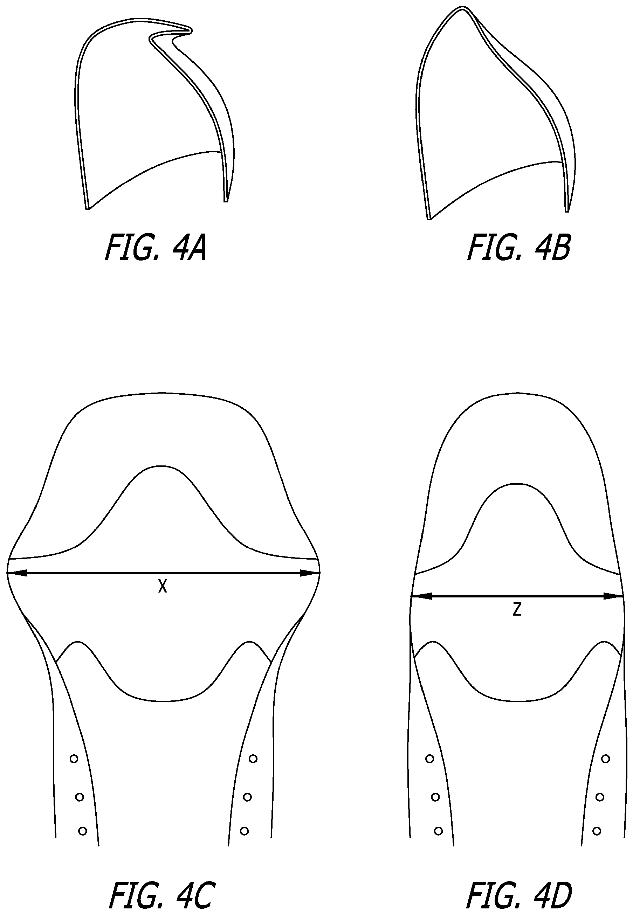

Further to this embodiment, when a user dons the shoe 12, the top portion of the convex curvature of the heel cup 52 or the uppermost segment of the heel counter 32 of the shoe 12 may be lowered and extend backward away from the foot as the heel counter 32 is compressed as shown in FIG. 4A. This action allows the user's foot to be inserted into the shoe opening 48 with a reduced degree of plantar flexion. During compression of the heel cup 52, portions of the heel cup 52 may move forward toward the direction of the forefoot portion. The distortion of the heel cup 52 may include the attached heel counter 32 widening with the medial and lateral sides of the heel cup moving outward thereby widening the opening of the shoe. The mediolateral widening of the shoe opening 48 allows easier entry such as easier insertion of the forefoot portion of the user's foot. In one exemplary embodiment, the shoe opening of 7.5 cm may widen up to 4 cm or about 50%. See FIGS. 4C and 4D. The widening may be less or more depending on the size of the shoe and the flexibility of the heel cup. In some shoes, the desired widening may be less or greater depending on the needs of securement and use.

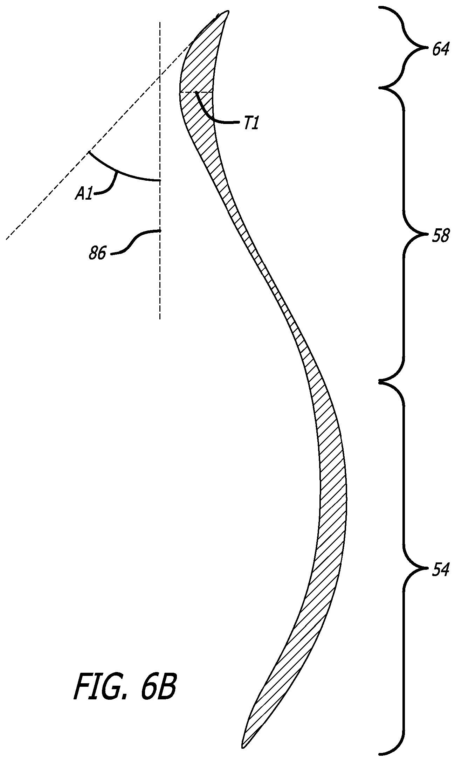

In an exemplary embodiment of the heel cup 52 as shown in FIGS. 1-4, the thickness T1 of a heel cup 52 made of a polymer material, such as Dupont Hytrel, may range from 0.4 millimeters to 4 millimeters. The range of thickness T1 of the heel cup may be thinner or thicker at various regions depending on the desired elastic and durable properties of the material. For example, the midpoint region may be thinner than the surrounding regions, and in particular a central portion may be thinner as shown in FIG 6B. The central portion may be spaced away from the medial and lateral edges wherein the peripheral edges may have a greater thickness. Other suitable materials may include other thermoplastic elastomers or other polymers capable of providing the compressible characteristics of the heel cup.

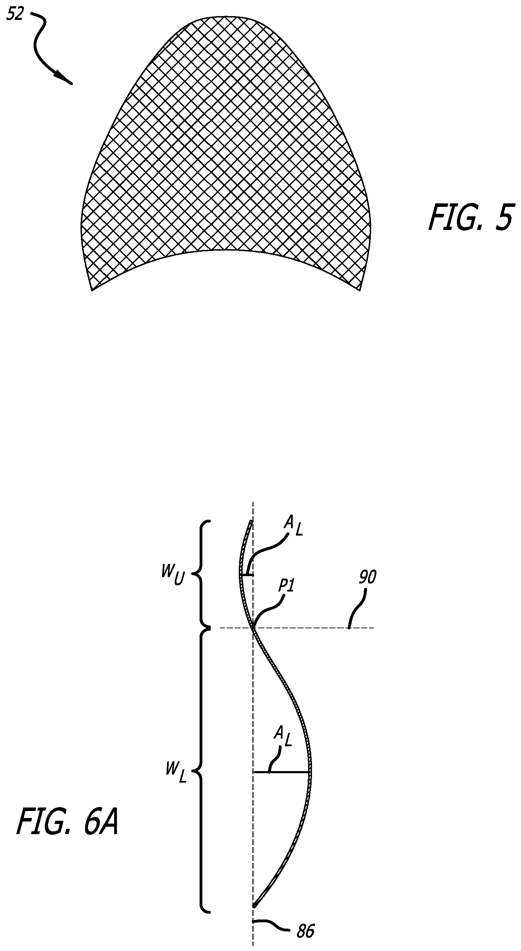

In another exemplary embodiment, the heel cup may be configured to have a series of crisscross beams that form an egg crate like configuration. FIG. 5 shows an exemplary embodiment with beams that are in a diagonal configuration. In an alternate embodiment, the beams may also be in a vertical and lateral configuration. The apertures between the beams may be approximately uniformly sized. The beams may be uniform in dimensions or vary in thickness and width. Beams that are thinner or less wide may be used to enhance flexibility and compressibility in designated locations while thicker or wider beams provide varying degrees of rigid support. For example, the beams may be thinner in the mid-portion, and in particular, the central portion of the mid-portion that is spaced away from the edges. The surrounding beams may be thicker than the central portion. The central portion may allow for greater flexibility in order to distort under a load.

In an exemplary embodiment, the rearmost portion of the heel cup 52 may have an overall vertical cross-sectional shape that resembles approximately an S wave as shown on a cross-sectional diagram of FIG. 6A. The upper and lower portions of the S wave may be differentiated at the point P1 through a horizontal plane, i.e. the midline 90, which is drawn between the upper arc and lower arc ends of the S wave and intersects the heel counter 52 and the inflection point of the S wave. The amplitude (*A*_{U}) and width (*W*_{U}) of arc of the upper portion of the S wave may be different than the amplitude (*A*_{L}) and width (*W*_{L}) of the lower arc of the lower portion of the S wave. In the exemplary embodiment, the *W*_{U} is approximately 0.44 times that of the *W*_{L}. The *A*_{U} is approximately 1/3 that of the *A*_{L}. In one possible embodiment, the *W*_{U} is approximately 2 centimeters and the *W*_{L} is approximately 4.5 centimeters. The *A*_{U} is roughly 3 millimeters and the *A*_{L} is roughly 9 millimeters. The S configuration decreases both in *A*_{U}/*A*_{L} and *W*_{U}/*W*_{L} in the crosssections in the areas extending from the rearmost portion's cross-section of the heel cup 52 and may only consist of the lower portion arc along the medial and lateral sides of the heel cup 52. The measurements at the rearmost portion of the heel cup 52 of the exemplary embodiment are intended to be exemplary.

The central region of the mid-portion of the heel cup may have a single aperture or a plurality of apertures. Just as the central region of the mid-portion may be constructed with less material than the maximum thickness of the collar and/or the maximum thickness of the base, the central region of the mid-portion of the heel cup may be constructed with a material of greater flexibility than the material forming its periphery. The resulting effects of the central region comprising a single aperture, a plurality of apertures, a lesser thickness, and/or a material of greater flexibility, may serve to facilitate entry and removal of the user's foot from the shoe.

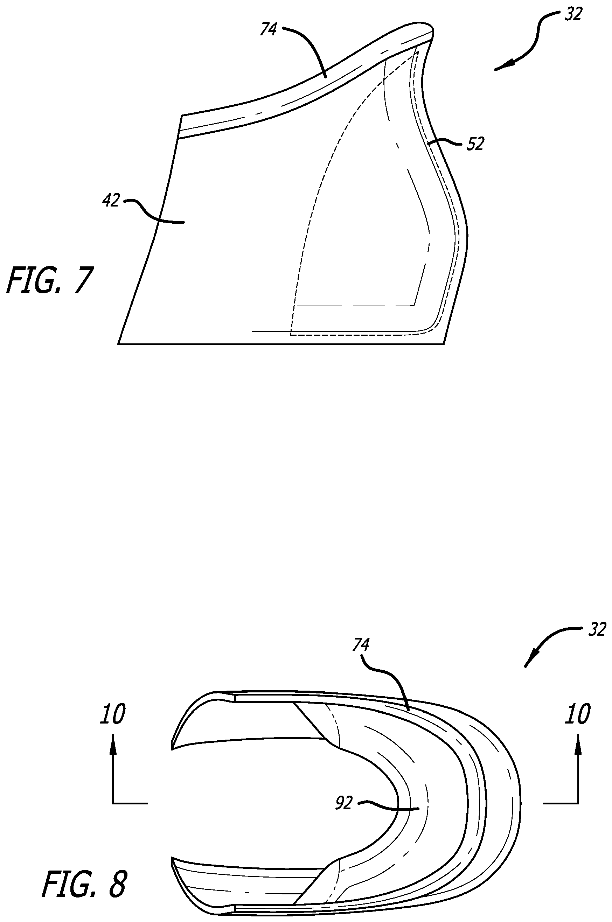

Further to the exemplary embodiment, the heel cup 52 may be attached at least to an interior foam layer 92, as shown in FIG. 10. The heel cup 52 may be located in the interior of the heel counter 32 of the upper 16 as shown in FIGS. 8-10. The foam layer 92 may line both the inner wall 66 of the heel cup 52 and outer wall of the heel cup 52. Around the upper portion and mid-portion, the foam layer 92 may protrude and extend further into the shoe opening 48. The foam layer 92 may be thicker at or adjacent to the upper portion 64 and mid-portion 58 of the heel cup 52 thereby forming part of the cuff of the shoe opening 48. The thicker foam layer 92 may provide securement of the user's foot once inserted within the shoe 12 as the foam would be located above the calcaneus bone region of the user's foot and extend around at least portions of the ankle region of the foot. Since the foam is compressible, the foam may be compressed by the heel during foot insertion or removal and hold the ankle of the user's foot once the foot is inserted.

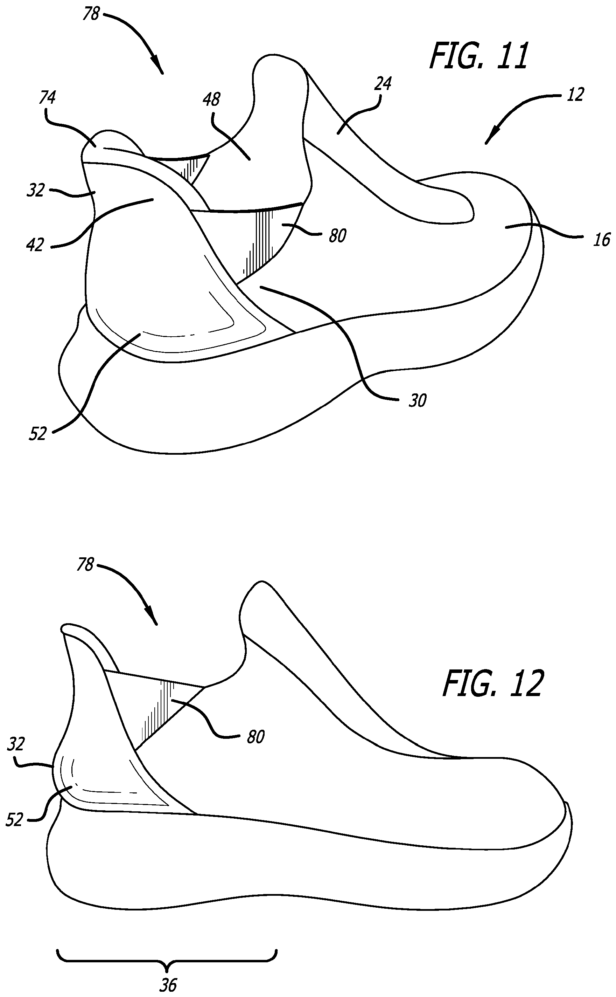

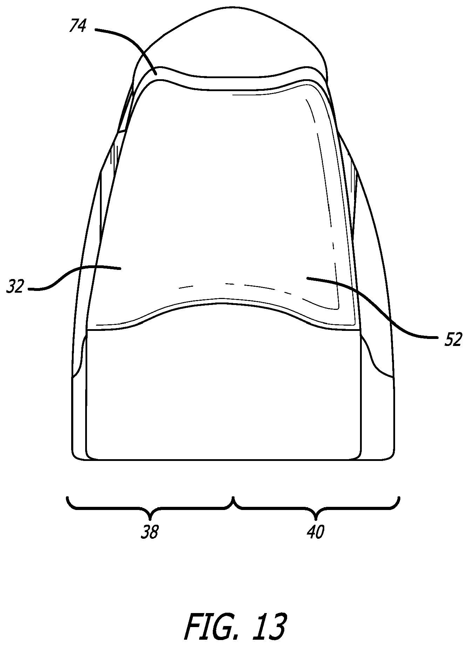

**Rigid Heel Cup.** In one exemplary embodiment, a shoe 12 may have a heel counter 32 located at the rear portion 36 of a shoe upper 16 as shown in FIGS. 11-13. The heel counter 32 may comprise a heel cup 52 which may be an interior component of the upper 16, a portion of the inner lining 46 or an attachment adjacent to the inner lining 46 of the upper 16 such that the heel cup 52 contacts the foot, or a portion of the exterior layer 42 of the upper 16 or an attachment of an outer surface of the exterior layer 42 of the upper 16.

The heel cup may have a lower portion that forms a heel cup configured to receive the heel of the foot. The lower portion of the heel cup may further have side extensions around both the medial side and lateral side. The heel cup may have a mid-portion located above the lower portion of the heel cup and that curves inward above the heel bone or may be composed of an aperture. The heel cup may have an aperture located at the rear of the heel cup. Further to this embodiment, the heel cup may be a rigid heel cup constructed of a substantially incompressible material under the load of the foot.

At least one aperture may be incorporated into the mid-portion of the rigid heel cup that may be added to enhance the fit of the shoe around the foot of the heel. The upper material layers covering the aperture may comprise an elastic material such that the material stretches around the contours of the heel. The tension created by the elastic material upon stretching may enhance the securement of the foot during normal use of the shoe.

The upper portion of the heel cup may be configured with a smooth curvature extending from the top edge of the heel cup curved downward towards the shoe opening 48. The inner wall of the upper portion has an overall downward incline that extends from the curved top edge of the upper portion toward the interior of the upper 16. The inner wall of the upper portion may have dimensions akin to a shoehorn such that the smooth curvature and angle of the downward incline of the upper portion allows the heel of the foot to slide into the shoe 12 with greater ease. The heel cup may be constructed of a rigid material that does not substantially compress under the load of the user's foot. In an alternate embodiment, the heel cup may have some flexibility such that the upper portion of the heel cup may have some slight flexibility sufficient to bend downward and away from the shoe opening and/or widen the shoe opening 48 for easier foot insertion and/or removal.

As shown in FIG. 11, the top edge 72 of the heel counter 32 may also form a resilient support structure of the rear heel collar 74. When the heel cup 52 is incorporated into the upper 16, a fabric material(s) or a suitable material(s) known in the art may be used to cover the heel cup 52 thereby forming the exterior layer 42 and interior layers or structures 44 of the upper. The fabric material may extend above the heel cup 52 thereby forming an extension of the heel collar 74.

Foam material or any inner lining material(s) known in the art may be used as an inner compressible layer of the upper 16 of FIG. 11. The foam material 76 may be bonded to the inner surface of the heel cup 52 to provide cushioning against the rigid heel cup material. The thickness of the foam material may be uniform or vary at certain locations depending on the desired cushioning or support to the foot. In one exemplary embodiment, thicker foam material may be located at the inner wall 66 of the upper portion 64 and may further extend at least a portion along the mediolateral length of the inner wall 66. The foam material may be configured to curve around at least a portion of the ankle above the heel when the shoe 12 is worn similar to the foam material configuration shown in FIG. 10. In this embodiment, the user's foot may compress the foam material during foot insertion. Following foot insertion, the foam material may expand to its fully uncompressed state or partially expand thereby improving the security of the foot within the shoe 12. A thinner foam material may be used to line the other portions of the heel cup 52.

The rigid heel cup 52 may be used in combination with a shoe upper 16 having at least one elastic region 78 located on the sides of the upper between the heel cup 52 and the front portion of the foot receiving shoe opening 48. The elastic region 78 may have one or more elastic materials that allow the rear portion of the heel counter 32 to be temporarily moved back to widen the foot receiving shoe opening 48 for easier insertion of the foot into the shoe 12. As shown in FIG. 11, the elastic material may be a gore piece 80 configured to be fixed within a void of the upper such as in the form of a gusset on the medial quarter or lateral quarter or both. The elastic material may be in any spacing between the heel cup 52 and the upper portion located at the quarters 30 or vamp 24 or possibly a tongue. The elastic material may also be configured as a series of elastic strips or webbing extending between the heel cup 52 to the medial and lateral sides of the vamp 24 or possibly a tongue.

**Instep Support.** In some embodiments, an instep support may be used to aid in preventing, in some instances, the instep of the user's foot from dragging a portion of the instep, or tongue partially into the throat area as the user dons the shoe.

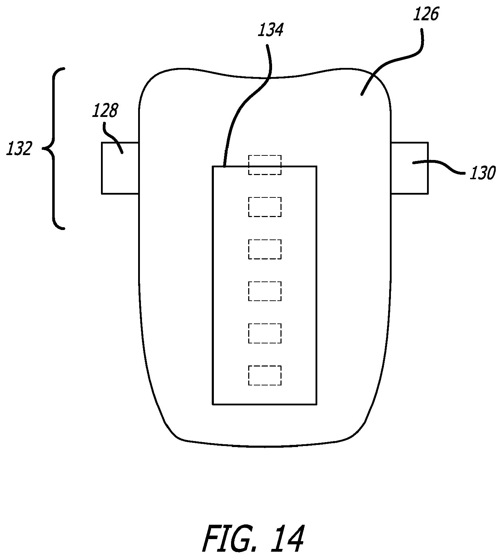

In some embodiments having a tongue 126 as shown in FIG. 14, the medial side of the upper portion 132 of the tongue 126 is attached to the first or proximal end of a medial elastic strap 128 and the lateral side of the upper portion 132 of the tongue 126 is attached to the first or proximal end of a lateral elastic strap 130. The front lower portion of the tongue is attached directly to the upper. Each of the medial and lateral elastic straps may be attached to the upper directly to the inner lining of the upper at its second or distal ends. In an alternate embodiment, the elastic straps may extend through an opening of the inner lining of the medial quarter and lateral quarter respectively. The second end of each of the medial and lateral elastic straps may terminate respectively at the sole, sockliner, or a region within the upper's interior lining. The elastic straps function to maintain the general positioning of the tongue when the user dons the shoe.

In other embodiments, each of the medial and lateral sides of the edge of the tongue or an upper portion of the tongue are attached by a gusset which may be of elastic material, to the inner lining of the upper of the medial quarter and lateral quarter of the upper. The gusset similarly may function to maintain the general positioning of the tongue when the user dons the shoe. In another embodiment of the tongue, the at least a portion of the medial and lateral edges of the tongue may be directly affixed or stitched to the interior portion of the upper and the tongue. Furthermore, the tongue may be extended wider than a conventional tongue along the mediolateral direction in the upper portion of the tongue and the edges or some portion of the extended portion may be affixed or stitched to the interior portion of the upper.

In other embodiments, an instep or tongue support which may be constructed of a sheetlike material of greater hardness than the fabric of the instep or tongue may be attached to the outer surface of the tongue or embedded between an exterior tongue layer and an inner tongue layer facing the shoe opening. The instep or tongue support may reduce or prevent the instep or tongue from collapsing during the insertion of the foot. In one embodiment shown in FIG. 14, tongue support 134 may be a more rigid material such as a thermoplastic polymer configured to be more rigid than the tongue. In some embodiments, the instep or tongue support may have a thickness of 0.2 mm to 1 mm. The instep support may be coextensive with the instep or tongue, or it may extend beyond the medial or lateral sides of the instep or tongue. In the embodiment shown in FIG. 14, the tongue support 134 may be narrower and shorter than the instep or tongue.

In one embodiment, a reinforcing quarter element may extend from the heel counter to the instep or eyestay. When a gusset is incorporated such as gusset 80 in FIG. 11-12, a reinforcing quarter element may extend from the heel counter 52 along the front lower edge of the gusset and around the top edge of the collar to the instep, a region near vamp 24, or an eyestay adjacent to a tongue. A reinforcing quarter element may be stiffer than the upper or quarter material. The reinforcing quarter element material may be constructed of leather, plastic, or rigid fabric. The reinforcing quarter element may be attached to the upper through bonding or stitching. The reinforcing quarter element may be configured as an elongated shape such as a strip that extends along the front lower edge of the gusset and the collar portion. The reinforcing quarter element may be located on the exterior surface or may be an interior layer of the upper such as a layer embedded within the upper or along a portion of the inner lining of the upper. A reinforcing quarter element may provide greater stability to the opening of the shoe such that it provides resistance against the quarters and instep region collapsing or moving inward into the opening of the shoe when the foot is inserted into the shoe and pushes the heel cup rearward.

When the reinforcing quarter element is used in combination with an eyestay layer used in laced shoes, the eyestay may add additional structural support in providing resistance against the quarters and instep from collapsing or moving inward into the opening of the shoe. Thus, as a foot pushes against the heel cup and the gusset is stretched rearward, the reinforcing quarter element is not significantly pulled rearward. Accordingly, the shoe opening may attain a wider opening when the foot is inserted into the shoe and pushes the heel cup rearward.

**Compressible lining.** In some embodiments, the inner surface of the heel counter and heel/ankle collar may have a portion having a compressible layer such as a foam layer. The compressible layer may extend into the shoe opening. The compressible layer is compressed under a load during the donning or removal of the shoe. After the foot is inserted into the shoe, the foam layer may expand fully or partially to its uncompressed state, and such expansion may enhance the securement of the foot within the shoe.

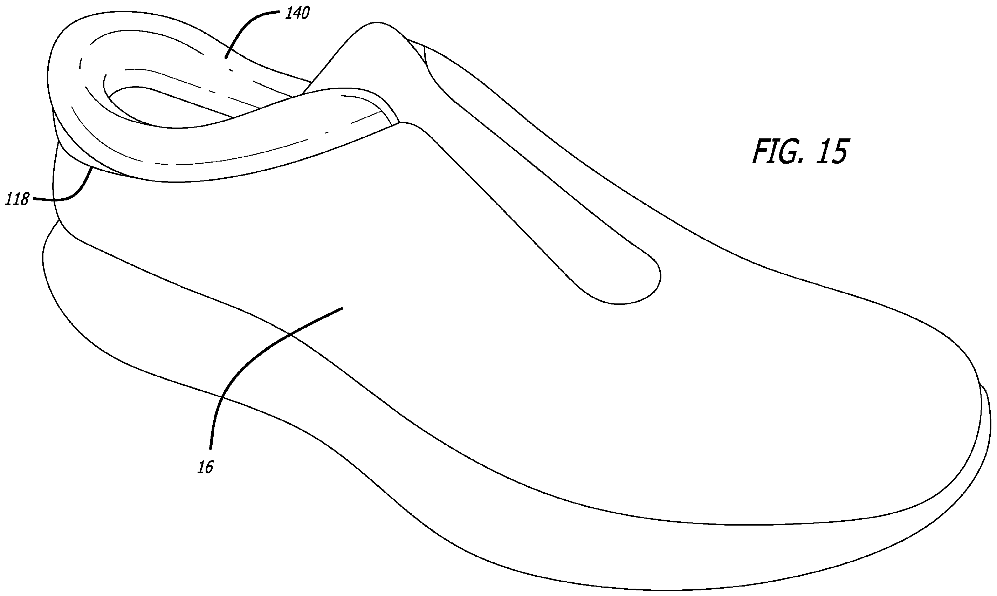

In one exemplary embodiment, the compressible layer 100 is embedded at least within a portion of the ankle collar 140 and the upper region of the heel counter 32. See FIGS. 15-19. The compressible layer 100 extends into the opening of the shoe. During the donning of the shoe, the foot exerts a load onto the compressible layer thereby widening the opening of the shoe through the transient compression of the compressible layer. After the foot is inserted into the shoe, the compressible layer expands partially or fully back to its original shape. Expansion of the compressible layer causes the foam to expand around the foot which may enhance comfort and securement of the foot. In some embodiments, the compressible layer extends above and/or around the calcaneus bone of the user's foot and around at least portions of the ankle region of the foot.

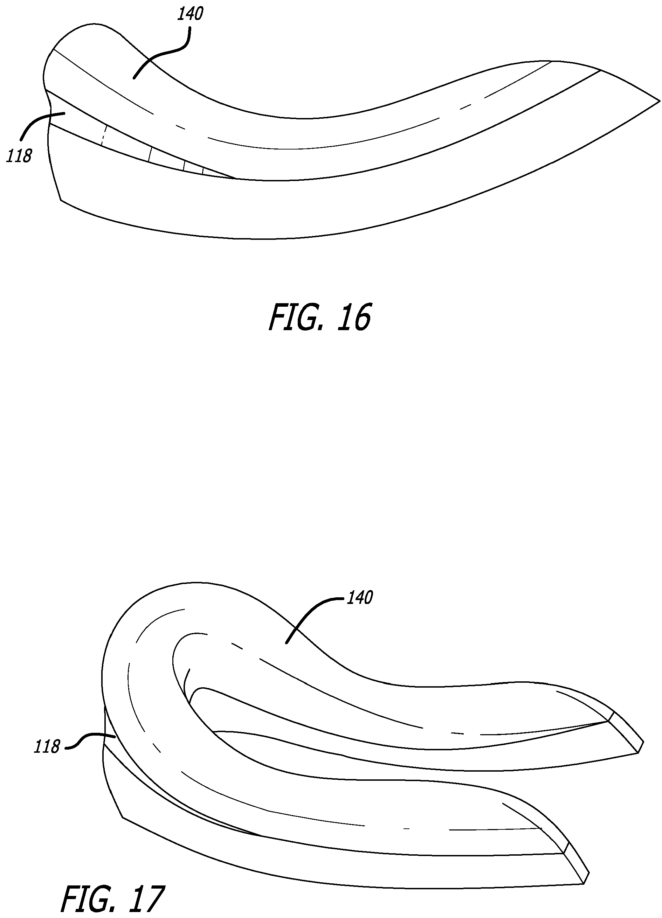

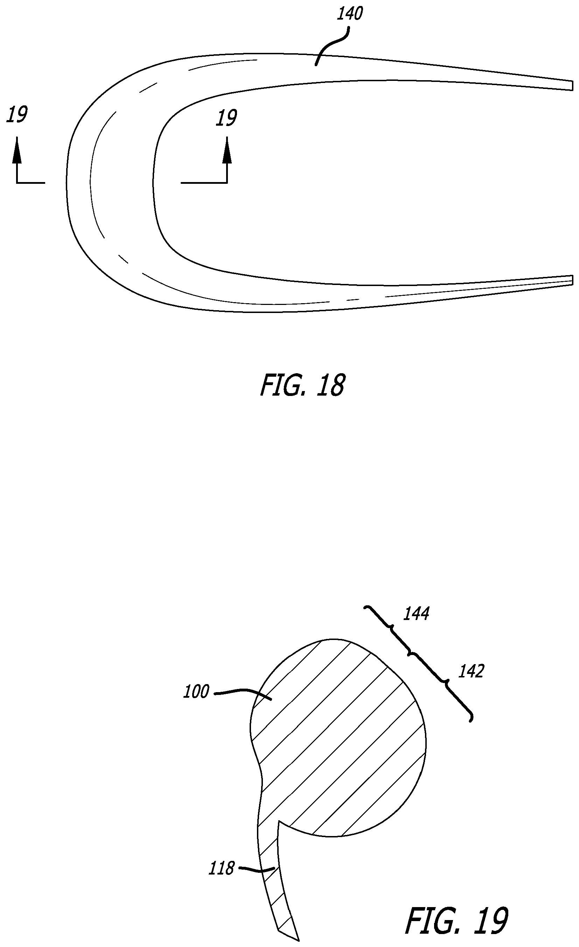

The compressible layer may be constructed of a material of a foam material such as EVA or polyurethane foam. The shape of the compressible layer may be pre-formed by molding the material, and affixing the compressible layer between at least two layers of textile material. The shape of the compressible layer may have at least partially a rounded outer surface that extends into the opening of the shoe and/or the ankle collar of the shoe. The volume of the compressible layer may be greater in the rear portion of the heel counter and taper along longitudinal direction of the inner portion of the foam layer at both sides of the shoe as shown in FIGS. 17-18. The compressible layer may also taper or be rounded along the vertical axis and that the compressible layer is greater in volume at the upper portion of the ankle collar 140 and less at the lower portion of the ankle collar 140. See FIGS. 18-19. The compressible layer may be used to form the entire heel cup without the need of an additional heel cup or heel counter. Alternatively, the compressible layer can be used in combination with a compressible heel cup, such as shown in FIG. 1. The heel cup can define an exterior surface of the upper, the heel cup can define an interior surface of the upper, or the heel cup can define an internal layer, for example, if embedded within the compressible layer.

In the exemplary embodiment, a lower flange 118 may extend downward from the ankle collar and is configured to attach to the upper. The lower flange may be configured in any dimensions necessary to secure the ankle collar to the upper. The lower flange may also vary in the length. In some embodiments, the lower flange may define the portion of the ankle collar attached to the upper without extending downward from the ankle collar at all. In other embodiments, the lower flange may extend downward partially or fully to the bottom of the upper. In some embodiments, the lower flange may be configured to form the heel counter. In other embodiments, a heel cup, such as shown in FIG. 1, may be partially or fully embedded in lower flange.

The compressible layer 100 may be covered by any type of textile. The textile may be elastic and may have wicking properties. The textile may be form fitted to the exterior shape of the compressible layer. In a preferred embodiment, an adhesive such as a thermoplastic based adhesive is applied to the compressible layer after which the compressible layer is inserted into an elastic textile sleeve. The resulting product may also be affixed by any means such as glue or stitching according to the desired pattern of the ankle collar 140. The textile may also include thermoplastic material and after the compressible layer 100 is inserted into the textile sleeve, heat may be applied to fuse the textile to the compressible layer 100. In a preferred embodiment, steam may be applied so that the textile conforms to the preformed shape that forms a portion of the ankle collar and/or heel counter.

Further to the exemplary embodiment, the ankle collar 140 is devoid of stitches or seams on its upper portion and may have a seam on the bottom portion where it is attached to the upper 16. The seamless ankle collar 140 may extend from the medial quarter, around the heel, to the lateral quarter. As the user's foot is inserted into the footwear, the user's heel depresses the compressible layer 100 against the heel cup. The heel cup may keep the structural integrity of a portion of the heel region of the upper 16 from collapsing when the user's heel depresses the compressible layer 100, thus allowing for an easier entry into the shoe by the user's foot without the use the user's hands or an external shoe horn. Once the user's heel is fully inserted into the shoe, the compressible layer may rebound and may exert force against the back of the user's heel above the calcaneus bone and around portions of the ankle region which may aid in providing comfort and securing the user's foot within the shoe.

Further to the exemplary embodiment, the cross-section of the seamless upper portion of the ankle collar 140 is substantially round. The ankle collar 140 may be separated into a forward portion 142 and a rear portion 144. Each of the forward portion and rear portion resemble an approximately circular cross-section 22 or semicircular cross-section wherein the radius of the forward portion is greater than the radius of the rear portion. See FIGS. 18-19. The compressible layer may be directly attached to the inner structure of the heel counter or via the textile sleeve covering the compressible layer material.

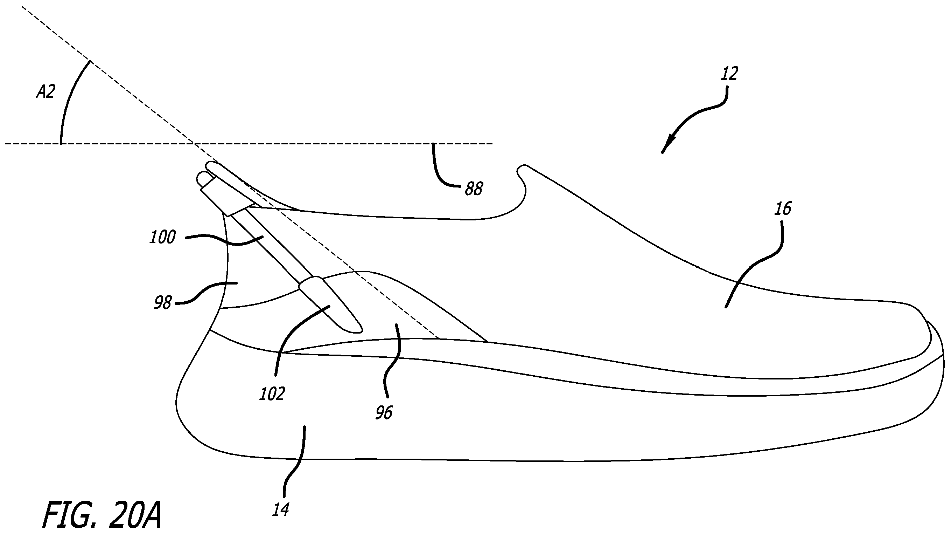

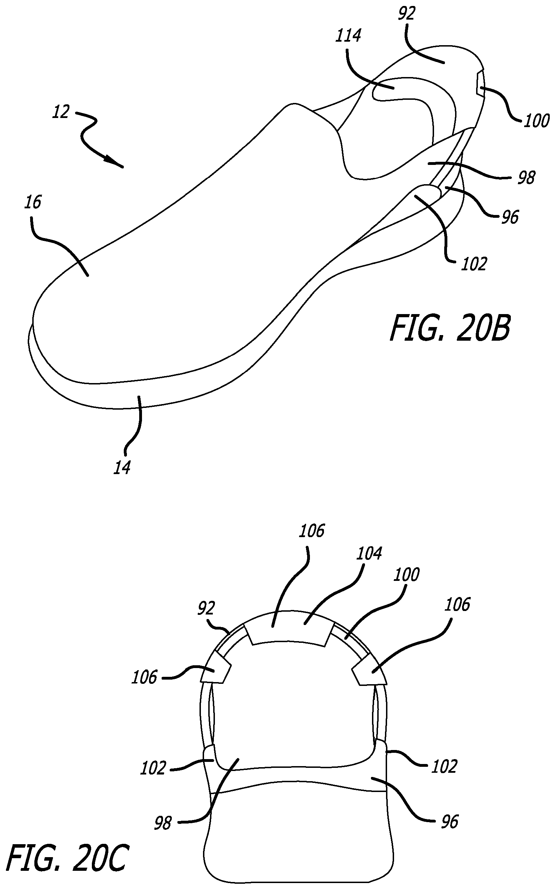

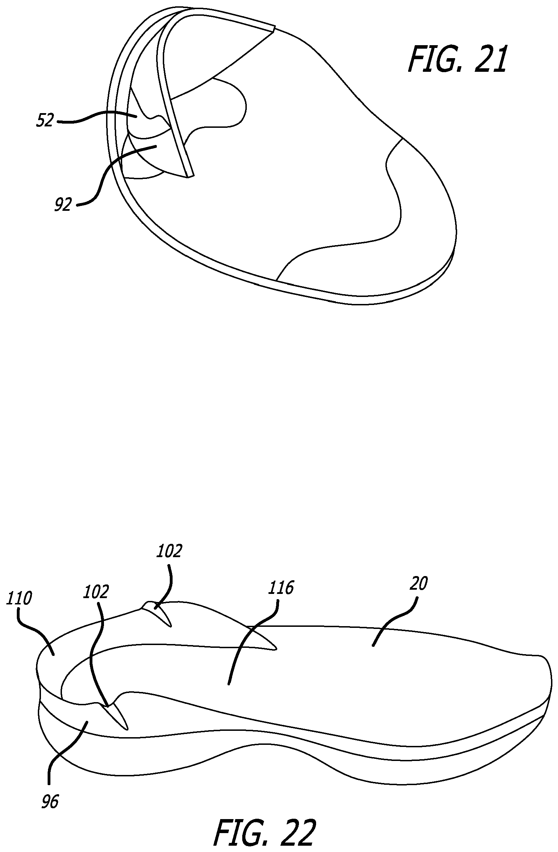

**Compressible Heel Counter with Heel Counter Support.** In another exemplary embodiment, heel counter support 96 may partially form an exterior layer of the shoe and extend around the heel portion of the upper 16 from the medial quarter of the shoe to the lateral quarter of the shoe as shown in FIGS. 20-22. In other embodiments, the heel counter support may further extend along a portion of the quarter, along the entire quarter, or along the entire quarter and into the vamp portion of the shoe. The heel counter support 96 may vary in height at different regions of the shoe. In the exemplary embodiment, the medial end and lateral end of the heel counter support 96 gradually decreases in height to the base of the upper 16 just above the sole 14. The heel counter supports 96 may have a medial region of a maximum height on the medial side of the heel portion of the upper, and a maximum height on the lateral side on the heel portion of the upper. The heel counter support 96 extends at least a portion of the height of the upper 16. In the exemplary embodiment, the height of the medial and lateral side heel portions 98 of the upper 16 is roughly 5 cm above the lasting surface 116 and the maximum height of the heel counter support 96 on the medial and lateral sides of the heel portion is roughly 3 centimeters above the lasting surface 116. The heel counter support 96 may gradually reduce in height from the region of its maximum height to a region of roughly uniform height along the rear of the heel portion 98 of the upper 16. In the exemplary embodiment, the height along the heel portion 98 of the upper 16 extents up to roughly 3 centimeters above the lasting surface 116, and the roughly uniform height of the portion forming rear portion of the heel counter support 96 is roughly 2 centimeters above the lasting surface 116.

The heel counter support 96 may partially form an exterior surface of the upper 16. The heel counter support 96 may have an interior surface in contact with an outer surface of the heel portion 98 of the upper 16. The heel counter support 96 may have a varying thickness across its exterior surface to its interior surface. In the exemplary embodiment, angular strips 102 form portions of increased thickness of the heel counter support 96. The angular strips 102 may provide increased rigidity to the heel counter support 96 as well as be configured to receive the compressible component 100.

In the exemplary embodiments, the angular strips 102 have hollowed protrusions on the medial and lateral sides of the shoe 12 into which the ends of the compressible component 100 are secured. The compressible component 100 may be a pipe wherein each end of the pipe is secured within the hollowed protrusions 102. A hollowed protrusion of the angular strips 102 may extend partially or completely around the surfaces of the compressible component 100. In the exemplary embodiment, the compressible component 100 may be formed from polyoxymethylene or any other material with similar durability and sufficient rigidity to support the load of a foot and flexibility to curve from medial to lateral sides of the heel portion of the shoe 12. The central segment 104 of the compressible component 100 may extend behind the ankle opening and above the heel counter of the shoe 12. In the exemplary embodiment, the angular strips 102 may be designed to receive the compressible component 100 at an angle so that the compressible component 100 extends from inside the hollowed protrusions 102 at a rearward incline A2 toward the back of the shoe 12. The rearward incline A2 of the compressible component 100 is approximately 45 degrees with respect to a level plane of the floor 88. See Fig. 20A. A foam layer 92 extending above the rear heel portion 98 of the upper 16 at the rear portion of the heel opening may have a rearward incline A2 that is coextensive with the compressible component 100. The rearward incline A2 of the foam layer 92 may assist in guiding the user's foot into the shoe 12 when donning the shoe.

The central segment 104 of the compressible component 100 may extend behind the rearmost portion of the upper 16 and may be threaded through one or more guide tunnels 106 in the upper 16. In the exemplary embodiment, strips of leather material are sewed to the foam layer 92 and extend above the upper at the rear portion of the heel opening. The ends of the strip of leather are stitched together to form guide tunnels 106 through which the compressible component is threaded.

When donning the shoe 12, the user's foot may depress the compressible component 100 and/or the rearwardly inclined foam layer 92 downward and rearward from the shoe opening. Once the user's foot has fully entered the shoe 12, the compressible component 100 and the rearwardly inclined foam layer 92 return to their initial elevated positions.

The additional interior heel support 114 made of foam material may have sufficient thickness that may enhance securing the foot at the Achilles tendon, and once the user dons the shoe 12, the calcaneus bone may be located below the additional interior heel support 114. The interior heel support 114 may have a sufficient height to be located above the calcaneus bone once the foot has been inserted into the shoe.

Further to the exemplary embodiment, the shoe may have a heel cup 52 made of a flexible material configured to receive the rear portion of the heel. In one embodiment, the heel cup is a thermoplastic material that provides sufficient support as a heel counter. The interior heel support 114 may be foam material lining to provide the necessary comfort to the user's heel.

Although the present invention has been described above by referring to particular embodiments, it should be understood that modifications and variations could be made to the sole structure without departing from the intended scope of invention, as defined in the appended claims.

## Claims

1. A shoe (12) comprising a sole (14) and an upper (16);
the upper comprising a heel counter (32), and the upper forming a foot receiving shoe opening (48);
the heel counter comprising a heel cup (52);
wherein the heel cup is uniformly molded with an upper portion (64), midportion (58), and lower portion (54); wherein the upper portion has a smaller mediolateral length than the midportion;
wherein, in a vertical cross-section, a rearmost portion of the heel cup has a S wave shape;
wherein a thickness of the heel cup decreases gradually from a peripheral portion forming an area at a periphery of the heel cup toward a central region of the midportion of the heel cup;
wherein the heel cup is attached to an interior compressible layer (92);
wherein the compressible layer extends into the shoe opening; and
wherein the compressible layer is configured to be compressed by a user's foot during insertion or removal of the user's foot, and configured to at least partially expand to hold an ankle of the user's foot once the foot is inserted.

2. The shoe of claim 1, wherein the midportion includes the peripheral portion having a first thickness and a central portion having a second thickness, wherein the second thickness is less than the first thickness.

3. The shoe of any preceding claim, wherein a minimum thickness in the central region of the midportion is between 1/4 to 1/6 relative to the thickest portions at the periphery of the heel cup.

4. The shoe of any preceding claim, wherein an inner wall of the upper portion of the heel cup has a convex curvature facing towards the shoe opening.

5. The shoe of any preceding claim, wherein the inner wall of the upper portion, at a rearmost portion of the heel cup, has a downward incline of between 0 and 90 degrees relative to a vertical line that is normal to a horizontal surface of the floor; preferably wherein:
the downward incline extends from a curved top edge of the upper portion towards an interior of the upper; and/or
the upper portion has a curvature extending from a top edge of the heel cup and curved downward towards the shoe opening.

6. The shoe of any preceding claim, wherein the compressible layer protrudes and extends into the shoe opening around the upper portion and midportion of the heel cup.

7. The shoe of any preceding claim, wherein the compressible layer extends above a calcaneus bone of a user's foot and extends around at least a portion of an ankle region of the user's foot.

8. The shoe of any preceding claim, wherein the compressible layer is thicker at the upper portion and the midportion than at the lower portion of the heel cup, thereby forming part of the cuff of the shoe opening; preferably wherein:
the thicker portion of the compressible layer is located above a calcaneus bone region of a user's foot and extends around at least a portion of an ankle region of the user's foot; and/or
the thicker portion of the compressible layer extends at least a portion along a mediolateral length of an inner wall of the heel cup.

9. The shoe of any preceding claim, wherein the compressible layer comprises a foam layer

10. The shoe of any preceding claim, wherein the compressible layer lines both an inner wall and an outer wall of the heel cup.

11. The shoe of any preceding claim, wherein the compressible layer has a at least partially rounded outer surface that extends into the shoe opening.

12. The shoe of any preceding claim, wherein a volume of the compressible layer: is greater in a rear portion of the heel counter, and tapers along a longitudinal direction of the compressible layer layer at both sides of the shoe.

13. The shoe of any preceding claim, wherein the compressible layer tapers along a vertical axis, being greater in volume in an upper portion than in a lower portion of an ankle collar of the shoe.

14. The shoe of any preceding claim, wherein the upper includes a tongue, and the shoe further comprises medial and lateral elastic straps, the medial and lateral elastic straps extending between medial and lateral sides of an upper portion of the tongue and an inner lining of the upper; preferably wherein:
the upper includes a medial quarter and a lateral quarter, and the elastic straps extend through an opening of the inner lining of the medial quarter and lateral quarter; and/or
the medial elastic strap comprises a first end attached to a medial side of an upper portion of the tongue, and a second end attached to an inner lining of the upper, or a sole or sockliner of the shoe, and the lateral elastic strap comprises a first end attached to a lateral side of the upper portion of the tongue, and a second end attached to the inner lining of the upper, or the sole the sockliner of the shoe.

15. The shoe of any preceding claim, wherein the upper portion of the heel cup has a first configuration and is configured to be distorted into a second configuration under a load of a user's foot, when the user is donning the shoe, wherein in the second configuration, at least part of the upper portion is lowered relative to the first configuration and the upper portion is configured to return to the first configuration after the load of the user's foot is removed; wherein the distortion of the heel cup into the second configuration comprises the heel counter widening with medial and lateral sides of the heel cup moving outward thereby widening an opening of the shoe.

16. The shoe of any of claims 1 to 15, wherein the heel cup is rigid.

17. The shoe of any preceding claim, wherein the upper comprises at least one elastic region located on the sides of the upper between the heel cup and a front portion of the shoe opening; and wherein the at least one elastic region comprises one or more elastic materials configured to stretch to allow a rear portion of the heel counter to be temporarily moved back to widen the shoe opening for easier insertion of a user's foot into the shoe.

## Patentansprüche

1. Schuh (12), der eine Sohle (14) und ein Obermaterial (16) umfasst;
wobei das Obermaterial eine Fersenhinterkappe (32) umfasst und das Obermaterial eine Fußaufnahmeschuhöffnung (48) bildet;
wobei die Fersenhinterkappe eine Fersenschale (52) umfasst;
wobei die Fersenschale einheitlich mit einem oberen Abschnitt (64), einem mittleren Abschnitt (58) und einem unteren Abschnitt (54) geformt ist; wobei der obere Abschnitt eine kleinere mediolaterale Länge als der mittlere Abschnitt aufweist;
wobei in einem vertikalen Querschnitt ein hinterster Abschnitt der Fersenschale eine S-Wellenform aufweist;
wobei eine Dicke der Fersenschale von einem Umfangsabschnitt, der einen Bereich an einem Umfang der Fersenschale bildet, zu einem zentralen Bereich des mittleren Abschnitts der Fersenschale hin allmählich abnimmt;
wobei die Fersenschale an einer inneren komprimierbaren Schicht (92) angebracht ist;
wobei sich die komprimierbare Schicht in die Schuhöffnung erstreckt; und
wobei die komprimierbare Schicht dazu ausgelegt ist, während eines Einsetzens oder Entfernens eines Fußes eines Benutzers durch den Fuß des Benutzers komprimiert zu werden, und dazu ausgelegt ist, sich zumindest teilweise auszudehnen, um einen Knöchel des Fußes des Benutzers zu halten, sobald der Fuß eingesetzt ist.

2. Schuh nach Anspruch 1, wobei der mittlere Abschnitt den Umfangsabschnitt mit einer ersten Dicke und einen zentralen Abschnitt mit einer zweiten Dicke aufweist, wobei die zweite Dicke kleiner als die erste Dicke ist.

3. Schuh nach einem der vorhergehenden Ansprüche, wobei eine Mindestdicke in dem zentralen Bereich des mittleren Abschnitts zwischen 1/4 und 1/6 relativ zu den dicksten Abschnitten am Umfang der Fersenschale beträgt.

4. Schuh nach einem der vorhergehenden Ansprüche, wobei eine Innenwand des oberen Abschnitts der Fersenschale eine zu der Schuhöffnung weisende konvexe Krümmung aufweist.

5. Schuh nach einem der vorhergehenden Ansprüche, wobei die Innenwand des oberen Abschnitts an einem hintersten Abschnitt der Fersenschale eine Abwärtsneigung zwischen 0 und 90 Grad relativ zu einer vertikalen Linie aufweist, die normal zu einer horizontalen Oberfläche des Bodens ist; vorzugsweise wobei:
sich die Abwärtsneigung von einer gekrümmten Oberkante des oberen Abschnitts zu einem Inneren des Obermaterials hin erstreckt; und/oder
der obere Abschnitt eine Krümmung aufweist, die sich von einer Oberkante der Fersenschale erstreckt und nach unten zur Schuhöffnung hin gekrümmt ist.

6. Schuh nach einem der vorhergehenden Ansprüche, wobei die komprimierbare Schicht um den oberen Abschnitt und den mittleren Abschnitt der Fersenschale herum vorsteht und sich in die Schuhöffnung erstreckt.

7. Schuh nach einem der vorhergehenden Ansprüche, wobei sich die komprimierbare Schicht über einem Fersenbein eines Fußes eines Benutzers erstreckt und sich um zumindest einen Abschnitt eines Knöchelbereichs des Fußes des Benutzers erstreckt.

8. Schuh nach einem der vorhergehenden Ansprüche, wobei die komprimierbare Schicht an dem oberen Abschnitt und dem mittleren Abschnitt dicker ist als an dem unteren Abschnitt der Fersenschale, wodurch ein Teil der Manschette der Schuhöffnung gebildet wird; vorzugsweise wobei:
sich der dickere Abschnitt der komprimierbaren Schicht über einem Fersenbeinbereich eines Fußes eines Benutzers befindet und sich um zumindest einen Abschnitt eines Knöchelbereichs des Fußes des Benutzers erstreckt; und/oder
sich der dickere Abschnitt der komprimierbaren Schicht zumindest einen Abschnitt entlang einer mediolateralen Länge einer Innenwand der Fersenschale erstreckt.

9. Schuh nach einem der vorhergehenden Ansprüche, wobei die komprimierbare Schicht eine Schaumstoffschicht umfasst.

10. Schuh nach einem der vorhergehenden Ansprüche, wobei die komprimierbare Schicht sowohl eine Innenwand als auch eine Außenwand der Fersenschale auskleidet.

11. Schuh nach einem der vorhergehenden Ansprüche, wobei die komprimierbare Schicht eine zumindest teilweise abgerundete Außenfläche aufweist, die sich in die Schuhöffnung erstreckt.

12. Schuh nach einem der vorhergehenden Ansprüche, wobei ein Volumen der komprimierbaren Schicht: in einem hinteren Abschnitt der Fersenhinterkappe größer ist und sich entlang einer Längsrichtung der komprimierbaren Schicht auf beiden Seiten des Schuhs verjüngt.

13. Schuh nach einem der vorhergehenden Ansprüche, wobei sich die komprimierbare Schicht entlang einer vertikalen Achse verjüngt, wobei sie in einem oberen Abschnitt ein größeres Volumen aufweist als in einem unteren Abschnitt eines Knöchelkragens des Schuhs.

14. Schuh nach einem der vorhergehenden Ansprüche, wobei das Obermaterial eine Zunge umfasst und der Schuh ferner mediale und laterale elastische Riemen umfasst, wobei sich die medialen und lateralen elastischen Riemen zwischen medialen und lateralen Seiten eines oberen Abschnitts der Zunge und einer Innenauskleidung des Obermaterials erstrecken; vorzugsweise wobei:
das Obermaterial ein mediales Quartier und ein laterales Quartier umfasst und sich die elastischen Riemen durch eine Öffnung der Innenauskleidung des medialen Quartiers und des lateralen Quartiers erstrecken; und/oder
der mediale elastische Riemen ein erstes Ende, das an einer medialen Seite eines oberen Abschnitts der Zunge angebracht ist, und ein zweites Ende, das an einer Innenauskleidung des Obermaterials oder einer Sohle oder Einlegesohle des Schuhs angebracht ist, umfasst und der laterale elastische Riemen ein erstes Ende, das an einer lateralen Seite des oberen Abschnitts der Zunge angebracht ist, und ein zweites Ende, das an der Innenauskleidung des Obermaterials oder der Sohle oder der Einlegesohle des Schuhs angebracht ist, umfasst.

15. Schuh nach einem der vorhergehenden Ansprüche, wobei der obere Abschnitt der Fersenschale eine erste Auslegung aufweist und dazu ausgelegt ist, unter einer Last eines Fußes eines Benutzers in eine zweite Auslegung deformiert zu werden, wenn der Benutzer den Schuh anzieht, wobei in der zweiten Auslegung zumindest ein Teil des oberen Abschnitts relativ zu der ersten Auslegung abgesenkt ist und der obere Abschnitt dazu ausgelegt ist, nach Entfernen der Last des Fußes des Benutzers in die erste Auslegung zurückzukehren; wobei die Deformierung der Fersenschale in die zweite Auslegung umfasst, dass sich die Fersenhinterkappe aufweitet, wobei sich mediale und laterale Seiten der Fersenschale nach außen bewegen, wodurch eine Öffnung des Schuhs aufgeweitet wird.

16. Schuh nach einem der Ansprüche 1 bis 15, wobei die Fersenschale starr ist.

17. Schuh nach einem der vorhergehenden Ansprüche, wobei das Obermaterial mindestens einen elastischen Bereich umfasst, der sich auf den Seiten des Obermaterials zwischen der Fersenschale und einem vorderen Abschnitt der Schuhöffnung befindet; und wobei der mindestens eine elastische Bereich ein oder mehrere elastische Materialien umfasst, die dazu ausgelegt sind, sich zu dehnen, um zu ermöglichen, dass ein hinterer Abschnitt der Fersenhinterkappe vorübergehend zurück bewegt wird, um die Schuhöffnung zum leichteren Einsetzen eines Fußes eines Benutzers in den Schuh aufzuweiten.

## Revendications

1. Chaussure (12), comprenant une semelle (14) et une tige (16) ;
la tige comprenant un contrefort (32), et la tige formant une ouverture de chaussure de réception de pied (48) ;
le contrefort comprenant une coque de talon (52) ;
dans laquelle la coque de talon est moulée uniformément avec une portion supérieure (64), une portion médiane (58), et une portion inférieure (54) ; dans laquelle la portion supérieure a une longueur médiolatérale plus petite que la portion médiane ;
dans laquelle, dans une section transversale verticale, une portion la plus arrière de la coque de talon a une forme d'onde en S ;
dans laquelle une épaisseur de la coque de talon diminue progressivement depuis une portion périphérique formant une zone à une périphérie de la coque de talon vers une région centrale de la portion médiane de la coque de talon ;
dans laquelle la coque de talon est attachée à une couche compressible intérieure (92) ;
dans laquelle la couche compressible s'étend dans l'ouverture de chaussure ; et
dans laquelle la couche compressible est configurée pour être comprimée par le pied d'un utilisateur durant l'insertion ou le retrait du pied de l'utilisateur, et configurée pour s'agrandir au moins partiellement pour supporter une cheville du pied de l'utilisateur une fois que le pied est inséré.

2. Chaussure de la revendication 1, dans laquelle la portion médiane inclut la portion périphérique ayant une première épaisseur et une portion centrale ayant une seconde épaisseur, dans laquelle la seconde épaisseur est inférieure à la première épaisseur.

3. Chaussure d'une quelconque revendication précédente, dans laquelle une épaisseur minimum dans la région centrale de la portion médiane est entre 1/4 et 1/6 relativement aux portions les plus épaisses à la périphérie de la coque de talon.

4. Chaussure d'une quelconque revendication précédente, dans laquelle une paroi intérieure de la portion supérieure de la coque de talon a une courbure convexe tournée vers l'ouverture de chaussure.

5. Chaussure d'une quelconque revendication précédente, dans laquelle la paroi intérieure de la portion supérieure, au niveau d'une portion la plus arrière de la coque de talon, a une inclinaison vers le bas d'entre 0 et 90 degrés relativement à une ligne verticale qui est normale à une surface horizontale du sol ; de préférence dans laquelle :
l'inclinaison vers le bas s'étend depuis un bord haut courbé de la portion supérieure vers un intérieur de la tige ; et/ou
la portion supérieure a une courbure s'étendant depuis un bord haut de la coque de talon et courbée vers le bas vers l'ouverture de chaussure.

6. Chaussure d'une quelconque revendication précédente, dans laquelle la couche compressible fait saillie et s'étend dans l'ouverture de chaussure autour de la portion supérieure et de la portion médiane de la coque de talon.

7. Chaussure d'une quelconque revendication précédente, dans laquelle la couche compressible s'étend au-dessus d'un calcanéum du pied d'un utilisateur et s'étend autour d'au moins une portion d'une région de cheville du pied de l'utilisateur.

8. Chaussure d'une quelconque revendication précédente, dans laquelle la couche compressible est plus épaisse au niveau de la portion supérieure et de la portion médiane qu'au niveau de la portion inférieure de la coque de talon, formant ainsi une partie du revers de l'ouverture de chaussure ; de préférence dans laquelle : la portion plus épaisse de la couche compressible est située au-dessus d'une région de calcanéum du pied d'un utilisateur et s'étend autour d'au moins une portion d'une région de cheville du pied de l'utilisateur ; et/ou la portion plus épaisse de la couche compressible s'étend sur au moins une portion le long d'une longueur médiolatérale d'une paroi intérieure de la coque de talon.

9. Chaussure d'une quelconque revendication précédente, dans laquelle la couche compressible comprend une couche de mousse.

10. Chaussure d'une quelconque revendication précédente, dans laquelle la couche compressible recouvre à la fois une paroi intérieure et une paroi extérieure de la coque de talon.

11. Chaussure d'une quelconque revendication précédente, dans laquelle la couche compressible a une surface extérieure au moins partiellement arrondie qui s'étend dans l'ouverture de chaussure.

12. Chaussure d'une quelconque revendication précédente, dans laquelle un volume de la couche compressible : est plus grand dans une portion arrière du contrefort, et s'effile le long d'une direction longitudinale de la couche compressible sur les deux côtés de la chaussure.

13. Chaussure d'une quelconque revendication précédente, dans laquelle la couche compressible s'effile le long d'un axe vertical, son volume étant plus grand dans une portion supérieure que dans une portion inférieure d'un bracelet de cheville de la chaussure.

14. Chaussure d'une quelconque revendication précédente, dans laquelle la tige inclut une languette, et la chaussure comprend en outre des brides élastiques médiane et latérale, les brides élastiques médiane et latérale s'étendant entre des côtés médian et latéral d'une portion supérieure de la languette et une doublure intérieure de la tige ; de préférence dans laquelle :
la tige inclut un quartier médian et un quartier latéral, et les brides élastiques s'étendent à travers une ouverture de la doublure intérieure du quartier médian et du quartier latéral ; et/ou
la bride élastique médiane comprend une première extrémité attachée à un côté médian d'une portion supérieure de la languette, et une seconde extrémité attachée à une doublure intérieure de la tige, ou à une semelle ou une fausse semelle de la chaussure, et la bride élastique latérale comprend une première extrémité attachée à un côté latéral de la portion supérieure de la languette, et une seconde extrémité attachée à la doublure intérieure de la tige, ou à la semelle ou la fausse semelle de la chaussure.

15. Chaussure d'une quelconque revendication précédente, dans laquelle la portion supérieure de la coque de talon a une première configuration et est configurée pour être déformée en une seconde configuration sous une charge du pied d'un utilisateur, lorsque l'utilisateur porte la chaussure, dans laquelle, dans la seconde configuration, au moins une partie de la portion supérieure est abaissée relativement à la première configuration et la portion supérieure est configurée pour retourner à la première configuration après que la charge du pied de l'utilisateur est enlevée ; dans laquelle la déformation de la coque de talon en la seconde configuration comprend l'élargissement du contrefort avec un déplacement, vers l'extérieur, des côtés médian et latéral de la coque de talon, élargissant ainsi une ouverture de la chaussure.

16. Chaussure de quelconques des revendications 1 à 15, dans laquelle la coque de talon est rigide.

17. Chaussure d'une quelconque revendication précédente, dans laquelle la tige comprend au moins une région élastique située sur les côtés de la tige entre la coque de talon et une portion avant de l'ouverture de chaussure ; et dans laquelle l'au moins une région élastique comprend un ou plusieurs matériaux élastiques configurés pour s'étirer pour permettre à une portion arrière du contrefort d'être reculée temporairement pour élargir l'ouverture de chaussure pour l'insertion plus aisée du pied d'un utilisateur dans la chaussure.
